# EUROPÄISCHE PATENTSCHRIFT

(11) **EP 0 469 105 B1**
(45) Veröffentlichungstag und Bekanntmachung des Hinweises auf die Patenterteilung: **06.10.1993**
(21) Anmeldenummer: 91903228.4
(22) Anmeldetag: 18.02.1991
(51) Int. Cl.: B65B 51/30

(54) **VORRICHTUNG ZUM HERSTELLEN, FÜLLEN UND VERSCHLIESSEN VON BEUTELN AUS EINEM HEISSVERSIEGELBAREN BAND**
DEVICE FOR MANUFACTURING BAGS FROM A THERMALLY WELDABLE STRIP, AND FOR FILLING AND SEALING SUCH BAGS
DISPOSITIF DE FABRICATION, DE REMPLISSAGE ET DE FERMETURE DE SACHETS CONSTITUES D'UNE BANDE SCELLABLE A CHAUD

(30) Priorität: 17.02.1990 DE 4005078
(43) Veröffentlichungstag der Anmeldung: 05.02.1992
(73) Patentinhaber: ROVEMA VERPACKUNGSMASCHINEN GMBH, 35461 Fernwald (DE)
(72) Erfinder: KAMMLER, Roman, D-6520 Worms 1 (DE)
(74) Vertreter: Missling, Arne, Dipl.-Ing.
(86) Internationale Anmeldenummer: DE9100122
(87) Internationale Veröffentlichungsnummer: WO9112177

(56) Entgegenhaltungen:
- CH-A- 433 100
- CH-A- 531 440
- DE-A- 1 815 029
- FR-A- 1 329 553
- FR-A- 2 106 682
- FR-A- 2 512 777

## Beschreibung

Die Erfindung bezieht sich auf eine Vorrichtung zum Herstellen, Füllen und Versiegeln von Beuteln aus einem heißversiegelbaren Band mit Mitteln zum Ausbilden eines Schlauches aus dem Band, einem Füllrohr sowie mit einer Quersiegelstation, welche zumindest zwei an gegenüberliegenden Seiten des Schlauches angeordnete, zyklisch bewegbare Quersiegelbacken umfaßt, wobei jede Quersiegelbacke (1) an einem Träger (2) gelagert ist, welcher mit zwei Parallel-Lenkeranordnungen (3,4) verbunden ist.

Aus dem Stand der Technik sind vielfältige Formen von derartigen Schlauchbeutelmaschinen bekannt. Das Grundprinzip besteht dabei jeweils darin, daß ein Folienband über eine Formschulter geführt wird, so daß sich die Ränder des Folienbandes überlappen und mittels einer Längsschweißeinrichtung zu einem Schlauch verschweißt werden können. Die Formschulter ist mit einem Füllrohr verbunden, so daß die zu verpackende Ware, meist von oben, durch das Füllrohr in den Schlauch eingefüllt werden kann. Um die einzelnen Schlauchbeutel zu versiegeln und zu verschließen, ist eine Quersiegelstation unterhalb des Füllrohres vorgesehen, welche mit quer zur Bewegungsrichtung der Schlauchbeutel bewegbaren Querschweißbacken ausgestattet ist. Die Querschweißbacken werden in zyklischen Abständen gegeneinander bewegt, um auf diese Weise die jeweiligen unteren bzw. oberen Querverschweißungen der Beutel zu erzeugen. Eine Bewegung der Querschweißbacken ist erforderlich, da anderenfalls der jeweils nächstfolgende Beutel nicht weitertransportiert werden könnte.

Eine einleitend beschriebene Vorrichtung ist aus der CH-A-433 100 bekannt. Bei dieser Anordnung sind zwei Quersiegelbacken an parallel geführten Lenkern angeordnet, die über einen aus zwei Lenkern bestehenden Kurbeltrieb angetrieben werden. Der zwischen dem Kurbelarm und dem die Siegelbacken tragenden Parallel-Lenker angeordnete Zwischenlenker ist über eine Rolle auf einer Kurvenbahn abgestützt, wobei der Anpreßdruck der Rolle an der Kurvenbahn über eine Feder aufrechterhalten wird, die am umlaufenden Kurbelantrieb angreift. Es handelt sich hier um eine Sechsgelenkanordnung, bei der die Verschiebung des die Schweißbacken tragenden Parallel-Lenkers von der Form der Kurvenbahn bestimmt wird. Eine derartige Vorrichtung ist nur für eine relativ kleine Anzahl von Siegelungen pro Minute einsetzbar, denn bei einer Vergrößerung der Siegelzahl würden die Fliehkräfte, die auf die Schweißbacken, den die Schweißbacken tragenden Lenker sowie den Zwischenlenker und die Rolle einwirken, diese von ihrer Kurvenbahn abheben, so daß der für die Schweißbacken vorbestimmte Weg nicht mehr eingehalten werden kann. Darüberhinaus ist diese bekannte Vorrichtung auch sehr aufwendig und damit störanfällig.

Des weiteren ist aus der FR-A-2 106 682 eine Quersiegelbackenanordnung bekannt, bei der eine bewegliche Siegelbacke einer unbeweglichen Siegelbacke gegenüberliegt. Die Steuerung der beweglichen Siegelbacke erfolgt über drei zusammenwirkende Steuerelemente, und zwar über einen umlaufenden Lenker, der der Siegelbacke die Grundbewegung aufprägt, einem Steuerarm, der über eine Kurvenrolle gesteuert wird, und einem Schließmechanismus, der über eine Kolbenzylindereinheit betätigt wird und mit dessen Hilfe die Siegelzeit bestimmt wird. Diese bekannte Vorrichtung ist sehr kompliziert aufgebaut, hat einen großen Platzbedarf und ist aufgrund ihrer Kompliziertheit auch störungsanfällig. Darüberhinaus ist auch diese Vorrichtung, da ein Glied über eine Kurvenrolle gesteuert wird, auf das eine durch eine Feder an dieser gehaltene Rolle abläuft, nicht für hohe Arbeitsgeschwindigkeiten geeignet.

Eine technisch andere Lösung besteht darin, die Querschweißbacken jeweils an einem drehbaren Träger zu lagern, so wie dies bei der Vorrichtung verwirklicht ist, die in der DE-PS 22 24 701 beschrieben ist. Eine ähnliche Lösung zeigt auch die DE-PS 31 41 431. Der Nachteil bei diesen rotierenden Siegelbacken besteht darin, daß diese nur für einen sehr kurzen Zeitraum in gegenseitige Anlage bringbar sind, so daß die zur Verfügung stehende Siegelzeit sehr kurz ist. Dies führt zu dem Ergebnis, daß diese Vorrichtungen nur für ein begrenztes Einsatzgebiet verwendbar sind und eine Steigerung der Produktionsgeschwindigkeit nicht zulassen.

Um dem Problem der relativ kurzen Siegelzeit bei den drehbar gelagerten Quersiegelbacken zu begegnen, wurde vorgeschlagen, diese in einer Kurvenbahn zu führen, welche zumindest zum Teil parallel zur Bewegungsrichtung der Schlauchbeutel verläuft. Eine derartige D-förmige Kurve ist aus der DE-PS 22 24 407 bekannt. Es ist dabei zwar möglich, die Siegelzeit in gewissem Maße zu vergrößern, die Führung der Quersiegelbacken in der D-förmigen Kurve bedingt jedoch erhebliche Beschleunigungen und Verzögerungen der Querschweißbacke bei einem Umlauf, so daß sich relativ hohe mechanische Belastungen ergeben. Das Ergebnis ist wiederum, daß die Produktionsgeschwindigkeit nicht beliebig gesteigert werden kann und daß zum anderen ein relativ hoher technischer Aufwand erforderlich ist.

Ein weiterer, zusätzlicher Nachteil der bisher bekannten Lösungen bei umlaufenden Quersiegelbacken liegt darin, daß die Quersiegelstation, insbesondere in Bewegungsrichtung der Beutel, relativ groß dimensioniert ist, so daß es bei üblichen Maschinengrößen nicht möglich ist, zusätzliche Vorrichtungen vorzusehen, beispielsweise eine Einrichtung zum Herstellen eines sogenannten Klotzbodens, welcher es ermöglicht, den Schlauchbeutel aufrechtstehend abzustellen.

Der Erfindung liegt die Aufgabe zugrunde, eine Vorrichtung der eingangs genannten Art nach der CH-A-433 100 zu schaffen, welche bei einfachem Aufbau und betriebssicherer Anwendbarkeit eine Verlängerung der Siegelzeit bei Erhöhung der Produktionsgeschwindigkeit ermöglicht, geringe Abmessungen sowie die Möglichkeit aufweist zusätzliche Vorrichtung für Sonderbeutel oder Sonderschweißverfahren einfach anzuordnen.

Diese Aufgabe wird mit den Merkmalen des Anspruches 1 gelöst.

Die erfindungsgemäße Vorrichtung zeichnet sich durch eine Reihe erheblicher Vorteile aus. Da unter Verwendung des Viergelenkmechanismus der Träger zusammen mit der Querschweißbacke nicht relativ zu der Mittellinie des Schlauches bzw. zu der Mittelebene der Querschweißverbindungen verkippt wird, ist es möglich, während des gesamten Kontaktvorganges zwischen der Querschweißbacke und dem Schlauchbeutelmaterial den Schweißvorgang durchzuführen. Es besteht somit nicht die Gefahr, daß die Querschweißbacke verkippt oder verkantet oder in einem nicht gewünschten Winkel auf das Schlauchbeutelmaterial auftrifft bzw. sich von diesem trennt. Die Querschweißbacke führt somit eine Querbewegung relativ zu der Oberfläche des Schlauchbeutelmateriales aus. Erfindungsgemäß kann darauf verzichtet werden, Kurvenbahnen oder Schleifringe vorzusehen, so daß die Vorrichtung insgesamt wesentlich einfacher aufgebaut ist und, verglichen mit den bisher bekannten Lösungen, nicht störungsanfällig ist. Ein besonderer Vorteil der erfindungsgemäßen Lösung besteht weiterhin darin, daß die Querschweißbacken durch den Viergelenkmechanismus umlaufend bewegt werden, so daß keine Beschleunigungen oder Verzögerungen in der Bewegung der Querschweißbacke auftreten. Dadurch ist es möglich, die Querschweißbacken grundsätzlich mit jeder beliebigen Umlaufgeschwindigkeit zu bewegen, so daß erhebliche Steigerungen der Produktionsgeschwindigkeit möglich sind.

Weiterhin ist die Erfindung nicht auf bestimmte Schweißverfahren beschränkt, es ist vielmehr möglich, beliebige Arten von Schweißbacken einzusetzen. Ein weiterer Vorteil der einfachen Ausgestaltung der Bewegungsrichtung der Schweißbacken liegt darin, daß die Zuführung von Kühlmedium erheblich vereinfacht wird, da keine Verdrehungen oder Verkippungen der Querschweißbacken auftreten und da der Bewegungsraum der Querschweißbacken relativ frei zugänglich ist.

Bedingt durch die universelle Ausgestaltbarkeit der Querschweißbacken und bedingt durch die Tatsache, daß die Siegelzeit beliebig einstellbar ist, eignet sich die erfindungsgemäße Vorrichtung für sämtliche üblicherweise verwendeten Folien. Weiterhin ist es günstig, daß ein beliebiger Schweißbackendruck (manuell oder automatisch) einstellbar ist, beispielsweise dadurch, daß die Querschweißbacke bewegbar und vorgespannt an dem Träger gelagert ist, so wie dies nachfolgend im einzelnen noch beschrieben werden wird.

Da die technische Ausgestaltung der Vorrichtung sehr einfach ist und da insbesondere im Bereich der Querschweißbacken lediglich der Viergelenkmechanismus erforderlich ist, kann die gesamte Anordnung sehr klein dimensioniert werden. Dadurch ist es möglich, die erfindungsgemäße Siegelstation auch in Verbindung mit weiteren Zusatzeinrichtungen, beispielsweise einer Klotzbodeneinrichtung zu verwenden.

In einer besonders günstigen Weiterentwicklung der Erfindung ist vorgesehen, daß die Querschweißbacke verschiebbar an dem Träger gelagert ist. Die Verschiebung der Querschweißbacke an dem Träger gestattet es, diese mit einem ausreichenden Anpreßdruck gegen die gegenüberliegende Querschweißbacke zu bewegen und vorzuspannen sowie einen entsprechenden Schweißweg einzustellen. Dadurch wird eine ausreichende Anlage an dem Schlauchbeutelmaterial sichergestellt.

Erfindungsgemäß ist es weiterhin günstig, wenn der Träger in Form einer parallel zu der durch die Mittellinie des Schlauchs und die Querschweißbacke beim Schweißvorgang festgelegte Mittelebene angeordneten Platte ausgebildet ist. Die plattenförmige Gestalt des Trägers vereinfacht zum einen die Lagerung der Querschweißbacke, zum anderen kann die Platte an ihren oberen und unteren Enden direkt mit dem Viergelenkmechanismus verbunden werden, so daß nur eine geringe Anzahl bewegter Bauteile mit einer geringen Masse vorhanden ist.

Um einen gleichbleibenden Siegeldruck sicherzustellen und um eine gleichmäßige Anlage der Querschweißbacke gegen das Schlauchbeutelmaterial zu gewährleisten, ist erfindungsgemäß, wie bereits erwähnt, vorgesehen, daß die Querschweißbacke senkrecht zu dem Träger verschiebbar und in Richtung auf die Mittelebene vorspannbar ist. Die Vorspannung kann beispielsweise mittels Federn erfolgen, während die Verschiebbarkeit der Querschweißbacke dadurch realisiert werden kann, daß diese mit Bolzen verbunden ist, die in Führungen der Trägerplatte gelagert sind. Weiter ist es vorteilhaft durch Sensoren den Anpreßdruck zu messen und manuell oder automatisch einzustellen.

Besonders günstig ist es erfindungsgemäß weiterhin, daß an dem Träger zusätzliche Bauelemente, beispielsweise Verschließ- und Abstreifelemente gelagert werden können, beispielsweise beidseitig zu der Querschweißbacke, so daß zusätzlich ein Verschließ- und Abstreifvorgang vorgenommen werden kann. Auch hierbei ist es besonders günstig, daß, bedingt durch die Bewegung des Trägers, exakte Bewegungsbahnen der Verschließ- und Abstreifelemente vorgegeben sind und die jeweilige Eingriffszeit auf das Beutelmaterial beliebig einstellbar ist. Dabei können die Verschließ- und Abstreifelemente, ähnlich der Querschweißbacke, ebenfalls senkrecht zu dem Träger an diesem gelagert und vorgespannt sein.

Erfindungsgemäß ist es möglich, die Viergelenkausgestaltung in weitem Rahmen zu variieren und den jeweiligen Bedürfnissen anzupassen. In Abhängigkeit von der Breite der Siegelbacke, welche beliebig veränderbar ist, kann beidseitig zu der Siegelbacke, d.h. an den beiden Enden des Trägers, jeweils eine Parallel-Lenkeranordnung vorgesehen sein. Es ist auch möglich, den Träger an einer oberen Parallel-Lenkeranordnung zu lagern und diese lediglich zur Führung und Ausrichtung des Trägers mit der unteren Parallel-Lenkeranordnung zu verbinden. Es ist damit möglich, den Träger sehr schmal auszuführen und die bewegten Massen der Anordnung weiter zu reduzieren.

Der Antrieb der Parallel-Lenkeranordnung erfolgt bevorzugterweise dadurch, daß diese mit einer Kurbel oder Kurbelscheibe versehen ist, die beispielsweise mit Ausgleichsgewichten ausgestattet und ausgewuchtet werden kann. Damit wird ein gleichmäßiger Lauf der gesamten Anordnung auch bei hohen Drehgeschwindigkeiten sichergestellt. Der Antrieb der Kurbelscheiben kann entweder dadurch erfolgen, daß diese jeweils mit einer gemeinsamen Antriebsachse betriebsverbunden sind, es ist jedoch auch möglich, nur die eine Kurbelscheibe, an welcher die Parallel-Lenkeranordnung angebracht ist, die den Träger trägt, mit der Antriebsachse zu verbinden und die andere Kurbelscheibe mit der ersten Kurbelscheibe betriebszuverbinden. Zu einem gleichmäßigen Lauf der gesamten Anordnung ist es selbstverständlich besonders günstig, wenn die Kurbelscheiben mit der gleichen Winkelgeschwindigkeit angetrieben werden.

Um erfindungsgemäß den Abstreifweg und/oder den Siegelweg einzustellen und den jeweiligen Anforderungen anzupassen, kann es besonders günstig sein, wenn der Abstand der beiden Achsen von der Mittelebene des Schlauchbeutels oder der Abstand der äußeren Backenfläche zum Drehpunkt verändert wird. Es ergibt sich damit, in Abhängigkeit von der federnden Lagerung der Querschweißbacke eine Verkürzung oder Verlängerung der Wegstrecke, während derer bei dem Umlauf der Querschweißbacke diese gegen das Schlauchbeutelmaterial anliegt.

Die erfindungsgemäße Vorrichtung ist sowohl bei horizontal wie auch vertikal arbeitenden Schlauchbeutelmaschinen vorteilhaft einsetzbar.

Im folgenden wird die Erfindung anhand von Ausführungsbei- spielen in Verbindung mit der Zeichnung beschrieben. Dabei zeigt:
- Fig. 1: eine schematische Seitenansicht des Grundprinzips der erfindungsgemäßen Quersiegelstation,
- Fig. 2: eine vergrößerte, schematische Teilansicht der Schweißbacke und des Trägers,
- Fig. 3: eine weitere schematische Seitenansicht des erfindungsgemäßen Viergelenkmechanismus,
- Fig. 4: eine weitere schematische Seitenansicht des Viergelenkmechanismus,
- Fig. 5: eine schematische Schnittansicht entlang der Linie V-V von Fig. 4,
- Fig. 6: eine schematische Seitenansicht einer weiteren Ausführungsform einer Antriebsanordnung gemäß der Erfindung,
- und 7: schematische Seitenansichten unterschiedlicher Antriebsanordnungen,
- Fig. 8: eine schematische stirnseitige Ansicht einer Klotzbodeneinrichtung,
- Fig. 9: eine Seitenansicht der in Fig. 8 gezeigten Anordnung,
- Fig. 10: einen Schnitt entsprechend Fig. 5 jedoch mit einem Druckmeßfühler und einer motorbetriebenen Backenverstelleinrichtung und
- Fig. 11: eine schematische Seitenansicht einer weiteren Ausführungsform gemäß der Erfindung für horizontale Schlauchbeutelmaschinen.

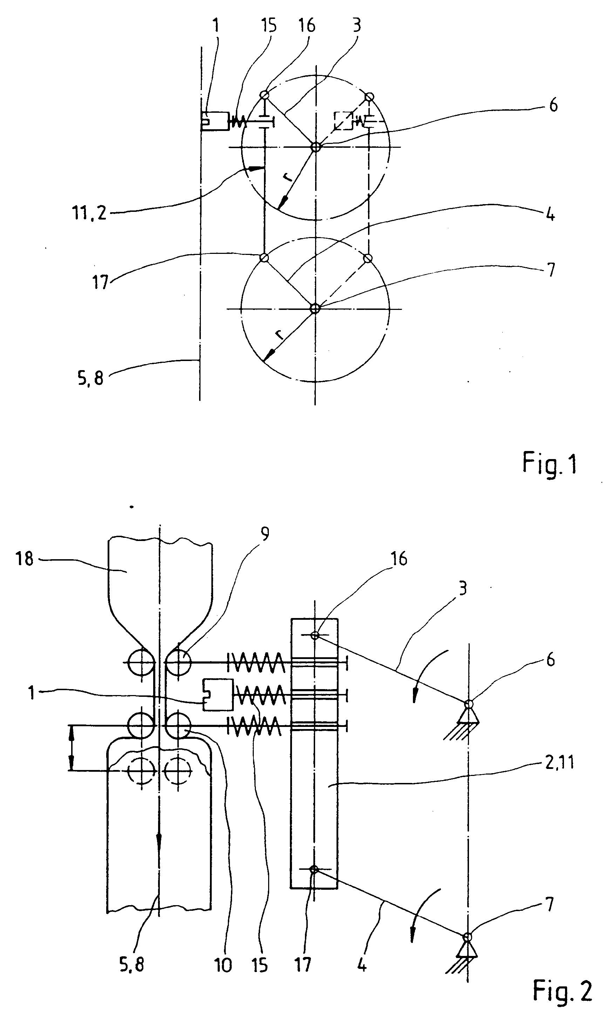

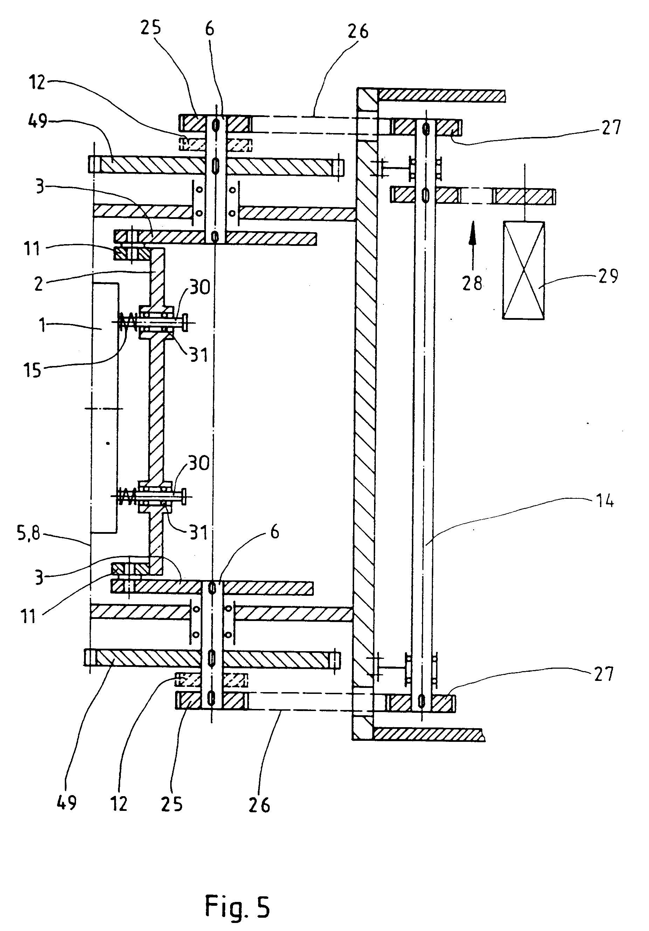

In Fig. 1 ist in schematischer Weise eine Darstellung der erfindungsgemäßen Quersiegelstation dargestellt. In der linken Bildhälfte der Fig. 1 ist die Mittellinie 5 des Folienschlauches bzw. die durch eine Quersiegelbacke 1 und die Mittellinie 5 aufgespannte Mittelebene 8 dargestellt. Die Quersiegelbacke 1 ist, wie im einzelnen anhand der Fig. 5 erläutert werden wird, verschiebbar an einem Träger 2 gelagert und mittels einer Feder 15 von dem Träger weg vorgespannt. Das obere und das untere Ende des Trägers 2 ist jeweils mit einem Gelenk 16,17 versehen, an welchem eine obere Parallel-Lenkeranordnung 3 und eine untere Parallel-Lenkeranordnung 4 angelenkt sind. Diese sind wiederum drehbar an einer oberen Achse 6 bzw. einer unteren Achse 7 gelagert, so daß die Gelenkachse der Gelenke 16 bzw. 17 die in Fig. 1 beschriebenen Kreisbahnen beschreiben, wenn der Träger 2 durch Verschwenkung um die Achse 6 bzw. 7 bewegt wird. Auf der rechten Bildhälfte ist gestrichelt eine Stellung dargestellt, in welcher die Quersiegelbacke 1 nach hinten verschwenkt ist.

Die Fig. 2 erläutert im einzelnen nochmals den Aufbau der schematisch in Fig. 1 dargestellten Anordnung und zeigt insbesondere, daß die Schwenkachsen 6,7 ortsfest gelagert sind.

In Fig. 2 ist weiterhin schematisch ein Schlauchbeutel 18 dargestellt, welcher mittels der Quersiegelbacke 1 verschweißt werden soll. Weiterhin ist in Fig. 2 ersichtlich, daß an dem Träger 2 ein oberes und ein unteres Verschließ- und Abstreifelement 9,10 gelagert sein kann, welches ebenfalls relativ zu dem Träger 2 verschiebbar und mittels Federn vorgespannt ist. Mittels des Verschließ- und Abstreifelementes ist es somit möglich, das Material des Schlauchbeutels 18 in an sich bekannter Weise zu spannen und auszurichten, bevor oder während die Quersiegelbacke den Schweißvorgang ausführt. Erfindungsgemäß ist es dabei insbesondere möglich, durch eine geeignete Anpassung der Bewegungsgeschwindigkeit des Schlauchbeutels 18 und der Drehgeschwindigkeit der Quersiegelbackenanordnung die Relativgeschwindigkeiten so zu wählen, daß entweder keine Relativgeschwindigkeit zwischen der Quersiegelbacke und dem Schlauchbeutelmaterial vorliegt, oder daß vor Einsetzen des eigentlichen Schweißvorganges mittels einer Relativbewegung ein Abstreifeffekt durch die Verschließ- und Abstreifelemente 9,10 hervorgerufen wird.

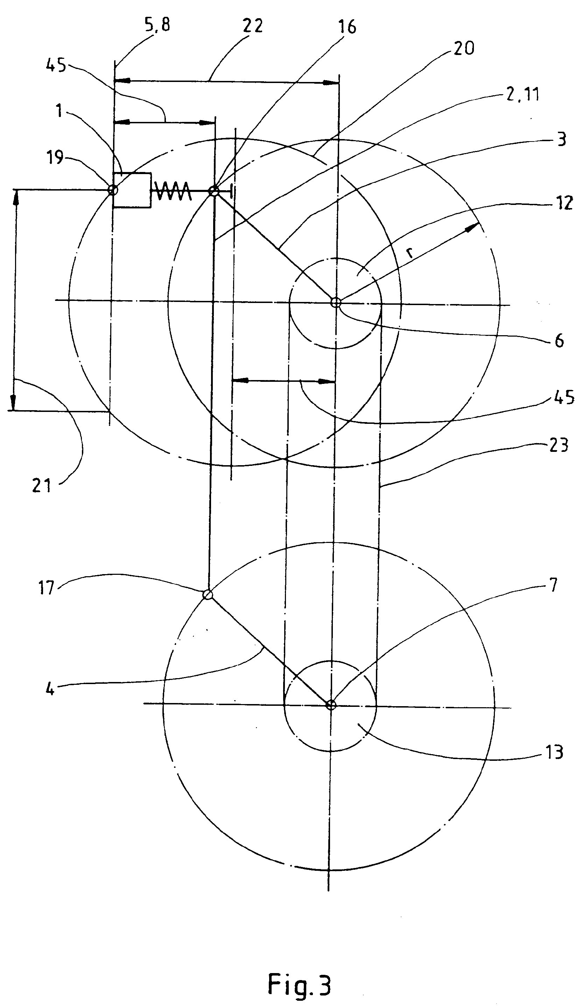

Die Fig. 3 zeigt nochmals eine vergrößerte Detaildarstellung der Anordnung, aus welcher sich insbesondere die Kreisbahn 20 des vorderen Kontaktpunktes 19 der Quersiegelbacke 1 ergibt. Aus der Darstellung gemäß Fig. 3 ist weiterhin ersichtlich, welche Länge der Schweißweg 21 aufweist, d.h. über welche Wegstrecke die Quersiegelbacke 1, bedingt durch ihre verschiebbare Lagerung an dem Träger 2, auf der Mittelebene 8 bzw. an der Mittellinie 5 geführt wird. Es ergibt sich weiterhin aus Fig. 3, daß durch eine einfache Änderung des Abstandes 22 zwischen der Mittellinie 5 bzw. der Mittelebene 8 und der durch die Achsen 6,7 aufgespannten Ebene oder durch eine Veränderung des Abstandes 45 zwischen der Fläche der Quersiegelbacke (Punkt 19) und den Drehpunkten (16, 17) der Schweißweg 21 variiert werden kann, oder durch Verändern der Länge ("r") der Lenker (3,4), so daß eine besonders einfache Anpassung der Vorrichtung an unterschiedliche Betriebsverhältnisse gewährleistet ist. Weiterhin ergibt sich aus der Fig. 3, daß die beiden Parallel-Lenkeranordnungen 3,4 jeweils mit einer Kurbelscheibe 12,13 bzw. einem ähnlichen Element verbunden sind, wobei die Kurbelscheiben 12,13 über einen Antrieb 23 miteinander so gekoppelt sind, daß sich gleiche Winkelgeschwindigkeiten ergeben.

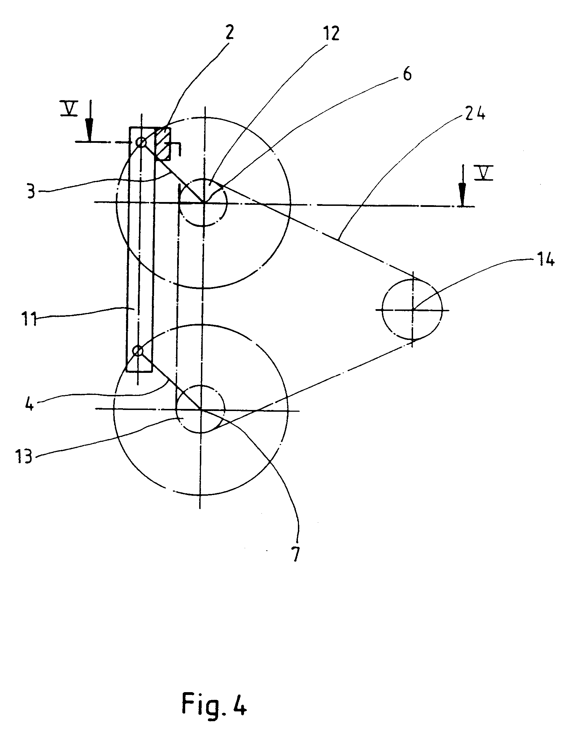

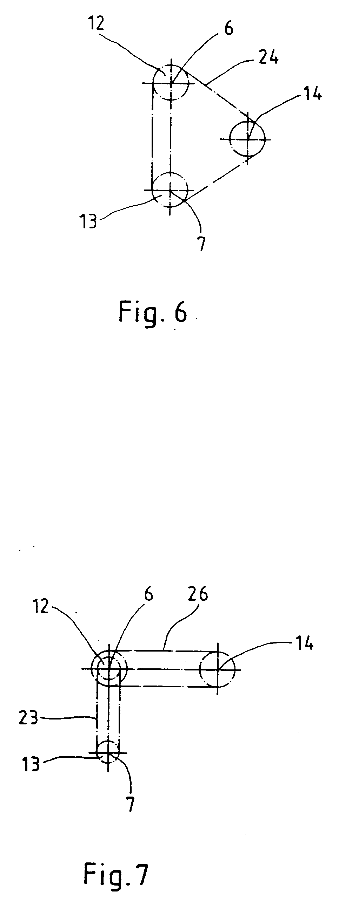

Die Fig. 4 zeigt nochmals eine schematische Seitenansicht der erfindungsgemäßen Anordnung, aus welcher sich der Antrieb der Kurbelscheibe 12,13 ergibt. Es ist möglich, mittels eines umlaufenden Antriebs 24, beispielsweise einer Kette oder Zahnriemen eine Antriebsachse 14 direkt sowohl mit der oberen Kurbelscheibe 12 als auch der unteren Kurbelscheibe 13 zu verbinden. Alternativen zu diesen Antrieben sind in den Fig. 6 und 7 gezeigt, alle Ausführungsvarianten stellen jeweils sicher, daß sich gleiche Winkelgeschwindigkeiten um die Achsen 6,7 ergeben.

Die Fig. 5 zeigt in schematischer Weise eine mögliche technische Ausgestaltungsform, welche teilweise bereits in der Fig. 4 gezeigt ist. Dabei ist der Träger 2 in Form eines schmalen Balkens ausgebildet und mit Verbindungslenkern 11 verbunden, welche wiederum in Betriebsverbindung mit der unteren Parallel-Lenkeranordnung 4 stehen. Wie sich aus Fig. 5 ergibt, sind die Verbindungslenker 11 an den Enden des Trägers 2 angebracht. Die Verbindungslenker 11 sind, wie ebenfalls aus Fig. 5 ersichtlich ist, mit den jeweiligen Kurbelscheiben 12 (oder 13) über die entsprechenden Parallel-Lenkeranordnungen 3, 4 verbunden, so daß diese um die Achsen 6,7 gedreht werden können. Es wird im einzelnen darauf verzichtet, das Gehäuse und die jeweiligen Lagerungen detailliert zu beschreiben, da sich diese für den Fachmann aufgrund seines Fachwissens ergeben. An den freien Enden der Achsen 6,7 ist jeweils ein Kettenrad 25 befestigt, welches über eine Kette 26 oder ein ähnliches Antriebselement mit einem weiteren Zahnriemenrad 27 verbunden ist, welches wiederum auf der Antriebsachse 14 gelagert ist. Der Antrieb erfolgt über ein weiteres Zwischengetriebe 28 und einen Antriebsmotor 29. Die Zahnräder 49 übertragen die entsprechende Drehbewegung auf den gegenüberliegenden Viergelenkmechanismus (hier nicht dargestellt) mit der (den) entgegengesetzten Quersiegelbacke(n).

Die verschiebbare Lagerung der Quersiegelbacke 1 an dem Träger 2 wird dadurch realisiert, daß an der Quersiegelbacke 1 Bolzen 30 befestigt sind, welche jeweils in einer Führung 31 verschiebbar an dem Träger 2 gelagert sind. Die Vorspannung der Quersiegelbacke 1 erfolgt über die bereits beschriebene Feder 15.

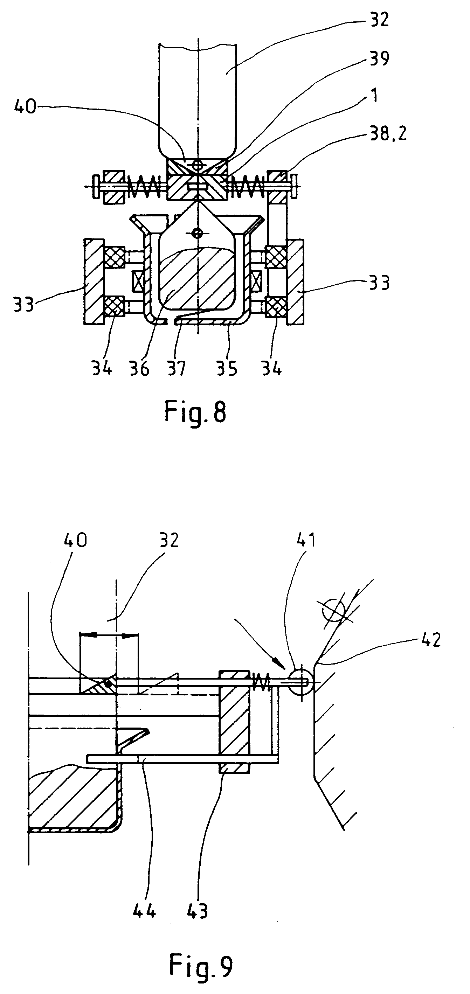

Die Fig. 8 und 9 zeigen Detailansichten der erfindungsgemäß zu verwendenden Klotzbodeneinrichtung. Mit 32 ist in den Fig. 8 und 9 der Folienschlauch bezeichnet. Unterhalb bzw. am unteren Ende der Vorrichtung ist eine Montageplatte 33 vorgesehen, an welcher Puffer 34 angebracht sind. Über die Puffer 34 ist ein Käfig 35 gelagert, der zur Aufnahme des Klotzbodenbeutels 36 dient. In der Darstellung gemäß Fig. 8 ist die gewendete Unternaht 37 ersichtlich. Weiterhin weist die Vorrichtung in bekannter Weise obere Backenträger 38 auf, welche mit den Trägern 2 gemäß den oben beschriebenen Ausführungsbeispielen korrespondieren. An diesen sind die Quersiegelbacken 1 gelagert. Oberhalb dieser ist weiterhin eine Luftkühlung 39 vorgesehen, sowie ein Klotzbodenstecher 40, welcher auch in der Seitenansicht gemäß Fig. 9 gezeigt ist. Der Antrieb erfolgt über eine Führungsrolle 41, die auf einer Nockenbahn 42 läuft. An einem Halter 43 ist außer dem Klotzbodenstecher 40 auch ein Seitenfaltenstab 44 gelagert, welcher dazu dient, in bekannter Weise eine Seitenfalte zu erzeugen. Die Klotzbodeneinrichtung entspricht dem bekannten Stand der Technik und braucht deshalb in ihrer Wirkungsweise im einzelnen nicht beschrieben werden. Wichtig ist erfindungsgemäß, daß diese, bedingt durch die geringe Bauhöhe der Quersiegelstation und die Anordnung der Quersiegelbacken, bei bekannten Maschinen unterhalb dieser eingesetzt werden kann.

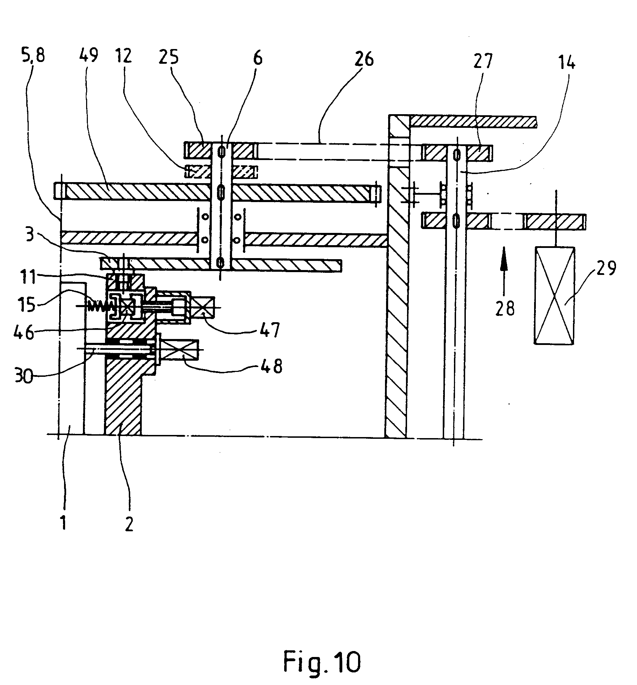

Die Figur 10 zeigt in schematischer Weise eine erweiterte Ausgestaltungsform der Ausführung aus Figur 5. Der Siegeldruck wird hier mit Hilfe eines Meßfühlers 46, 47 eingestellt und gemessen, der einen Sensor 46 sowie einen Antrieb 47 für die Einstellung des Druckes aufweist. Der Schweißweg 21 wird weiter durch den Antrieb 48 eingestellt. Dank dieser Ausführung kann eine automatische Siegeldruck- und Siegelwegeinstellung erreicht werden.

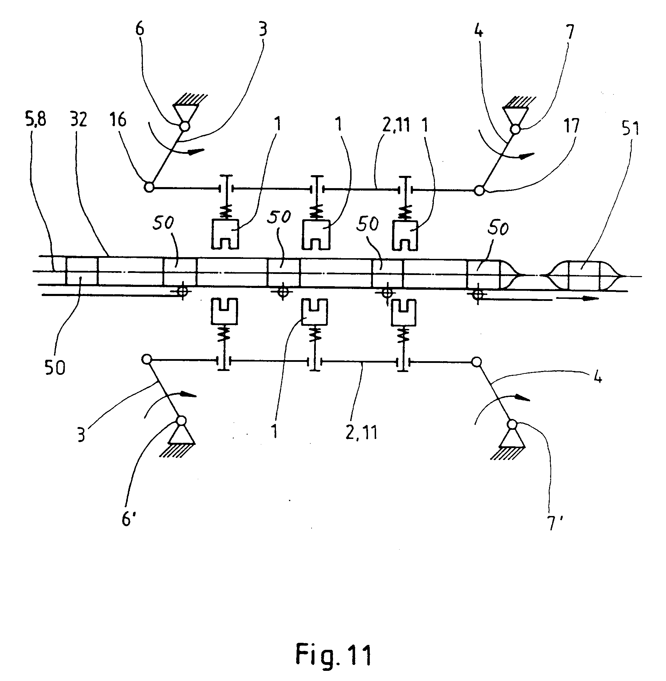

In der Fig. 11 ist der Einsatz einer erfindungsgemäßen Vorrichtung bei horizontal arbeitenden Verpackungsmaschinen dargestellt. Hier ist es vorteilhaft mehrere Paare von Quersiegelbacken 1 hintereinander anzuordnen, wodurch die Ausbringung erheblich erhöht wird. Die Folie 32 umhüllt das zu verpackende und bereits in definierten Abständen angeordnete Produkt 50. Die Folie wird zuerst längsverschweißt zu einem Schlauch und danach quer mittels Quersiegelbacken 1. Die verpackten Beutel 51 werden kontinuierlich abgeführt. Die Arbeitsweise entspricht somit der vertikalen Ausführung, mit dem Unterschied, daß die Verbindungslenker 11 hier auch horizontal angeordnet sind.

Die Erfindung ist nicht auf die gezeigten Ausführungsbeispiele beschränkt, vielmehr ergeben sich für den Fachmann im Rahmen der Ansprüche vielfältige Abwandlungs- und Modifikationsmöglichkeiten.

## Patentansprüche

1. Vorrichtung zum Herstellen, Füllen und Verschließen von Beuteln aus einem heißversiegelbaren Band mit Mitteln zum Ausbilden eines Schlauches aus dem Band, einer Fülleinrichtung sowie mit einer Quersiegelstation, welche zumindest zwei an gegenüberliegenden Seiten des Schlauchs angeordnete, zyklisch bewegbare Quersiegelbacken umfaßt, wobei jede Quersiegelbacke (1) an einem Träger (2) gelagert ist, welcher mit zwei Parallel-Lenkeranordnungen (3,4) verbunden ist, dadurch gekennzeichnet, daß die Parallel-Lenkeranordnungen (3,4) um zueinander parallele, senkrecht zur Mittellinie (5) des Schlauches angeordnete Achsen (6,7) zur Ausbildung eines Viergelenkmechanismus schwenkbar sind, daß die Quersiegelbacke (1) in Richtung auf die durch die Mittellinie (5) des Schlauchs und die Quersiegelbacke (1) beim Schweißvorgang festgelegte Mittelebene (8) vorgespannt und entgegen einer Federkraft verschiebbar ist, daß jede der beiden Achsen (6,7) synchron angetrieben ist, und daß die Backenbahn (2) und damit der Schweißweg durch Verändern der Länge ("r") der Lenker (3,4), durch den Abstand (22) der Achsen (6,7) zur Mittelebene (8) und/oder durch den Abstand (45) der Quersiegelbacke (1) zu ihrem Träger (2) veränderbar ist.

2. Vorrichtung nach Anspruch 1, dadurch gekennzeichnet, daß die Quersiegelbacke (1) verschiebbar an dem Träger (2) gelagert ist.

3. Vorrichtung nach Anspruch 1 oder 2, dadurch gekennzeichnet, daß der Träger (2) in Form einer parallel zu der Mittelebene (8) angeordneten Platte ausgebildet ist.

4. Vorrichtung nach Anspruch 3, dadurch gekennzeichnet, daß die Quersiegelbacke (1) senkrecht zu dem Träger (2) verschiebbar ist.

5. Vorrichtung nach einem der Ansprüche 1 bis 4, dadurch gekennzeichnet, daß die Quersiegelbacke (1) im wesentlichen mittig an dem Träger (2) gelagert ist und daß beidseitig zu der Quersiegelbacke (1) zu dieser parallele Verschließ- und Abstreifelemente (9,10) an dem Träger (2) angeordnet sind.

6. Vorrichtung nach Anspruch 5, dadurch gekennzeichnet, daß die Verschließ- und Abstreifelemente (9,10) senkrecht zu dem Träger (2) verschiebbar und in Richtung auf die Mittelebene (8) vorgespannt sind.

7. Vorrichtung nach einem der Ansprüche 1 bis 6, dadurch gekennzeichnet, daß der Träger (2) an einer oberen Parallel-Lenkeranordnung (3) gelagert ist und daß die obere Parallel-Lenkeranordnung (3) mittels eines Verbindungslenkers (11) mit einer unteren Parallel-Lenkeranordnung (4) verbunden ist.

8. Vorrichtung nach einem der Ansprüche 1 bis 7, dadurch gekennzeichnet, daß beidseitig des Trägers (2) jeweils eine Parallel-Lenkeranordnung (3,4) vorgesehen ist.

9. Vorrichtung nach einem der Ansprüche 1 bis 8, dadurch gekennzeichnet, daß die Parallel-Lenkeranordnung (3,4) an der Achse (6,7) mittels einer Kurbel oder Kurbelscheibe (12,13) gelagert ist.

10. Vorrichtung nach Anspruch 9, dadurch gekennzeichnet, daß die Kurbel oder Kurbelscheiben (12,13) mit einer gemeinsamen Antriebsachse (14) betriebsverbunden sind.

11. Vorrichtung nach Anspruch 9, dadurch gekennzeichnet, daß die Kurbel oder Kurbelscheibe (12) der oberen Parallel-Lenkeranordnung (3) mit einer Antriebsachse (14) sowie mit einer Kurbelscheibe (13) der unteren Parallel- Lenkeranordnung (4) betriebsverbunden ist.

12. Vorrichtung nach einem der Ansprüche 9 bis 11, dadurch gekennzeichnet, daß die Kurbelscheiben (12,13) mit der gleichen Winkelgeschwindigkeit angetrieben werden.

13. Vorrichtung nach einem der Ansprüche 1 bis 12, dadurch gekennzeichnet, daß der Träger (2) in einer Sinusbewegung senkrecht zur Schlauchbeutel-Mittellinie (5) bewegt wird.

14. Vorrichtung nach einem der Ansprüche 1 bis 12, dadurch gekennzeichnet, daß der Abstreifweg und/oder der Siegelweg durch Änderung des Abstandes der Achsen (6,7) von der Mittelebene (8) einstellbar ist.

15. Vorrichtung nach einem der Ansprüche 1 bis 14, dadurch gekennzeichnet, daß der Quersiegelstation eine Klotzbodenstation nachgeordnet ist.

16. Vorrichtung nach einem der Ansprüche 1 bis 15, dadurch gekennzeichnet, daß jede Quersiegelbacke über einen Meßfühler (46, 47) am Träger (2) zur Erfassung des Anpreßdruckes abgestützt ist.

17. Vorrichtung nach einem der Ansprüche 1 bis 16, dadurch gekennzeichnet, daß der Abstand jeder Quersiegelbacke (1) zu ihrem Träger (2) über eine Stelleinrichtung (48) einstellbar ist.

18. Vorrichtung nach Anspruch 17, dadurch gekennzeichnet, daß die Verstellung der Siegelbacke (1) in Abhängigkeit des Siegeldruckes eingestellt wird.

## Claims

1. Device for manufacturing, filling and sealing bags made from a heat-sealable strip, having means for forming a hose from the strip, a filling device, and a cross-sealing bay, which comprises at least two cross-sealing jaws disposed on opposite sides of the hose and operating in cycles, wherein each cross-sealing jaw (1) is mounted on a support (2) connected to two parallel link devices (3, 4), characterised in that the parallel link devices (3, 4) are pivotable about mutually parallel shafts (6, 7) running perpendicular to the centre line (5) of the hose so as to form a four-bar mechanism, in that the cross-sealing jaw (1) is biased in the direction of the centre plane (8) - set up in the welding operation and extending through the centre line (5) of the hose and the cross-sealing jaw (1) - and is displaceable against the force of a spring, in that each of the two shafts (6, 7) is driven synchronously, and in that the jaw path (2), and hence the welding path, is variable, by adjustment of the length ("r") of the links (3, 4), by the distance (22) of the shafts (6, 7) from the centre plane (8) and/or by the distance (45) of the cross-sealing jaw (1) from its support (2).

2. Device according to claim 1, characterised in that the cross-sealing jaw (1) is mounted displaceably on the support (2).

3. Device according to claim 1 or 2, characterised in that the support (2) takes the form of a plate disposed parallel to the centre plane (8).

4. Device according to claim 3, characterised in that the cross-sealing jaw (1) is displaceable perpendicular to the support (2).

5. Device according to one of claims 1 to 4, characterised in that the cross-sealing jaw (1) is mounted substantially centrally on the support (2), and in that on either side of the cross-sealing jaw (1) abrasion and scraper elements (9, 10) are mounted parallel thereto on the support (2).

6. Device according to claim 5, characterised in that the abrasion and scraper elements (9,10) are displaceable perpendicular to the support (2) and are biased in the direction of the centre plane (8).

7. Device according to one of claims 1 to 6, characterised in that the support (2) is mounted on an upper parallel link mechanism (3), and in that the upper parallel link mechanism (3) is connected to a lower parallel link mechanism (4) by means of a connecting link (11).

8. Device according to one of claims 1 to 7, characterised in that a respective parallel link mechanism (3, 4) is provided on either side of the support (2).

9. Device according to one of claims 1 to 8, characterised in that the parallel link mechanism (3, 4) is mounted on the shaft (6, 7) by means of a crank or crank disc (12, 13).

10. Device according to claim 9, characterised in that the crank or crank discs (12, 13) are drivingly connected to a common drive shaft (14).

11. Device according to claim 9, characterised in that the crank or crank disc (12) of the upper parallel link mechanism (3) is drivingly connected to a drive shaft (14) and a crank disc (13) of the lower parallel link mechanism (4).

12. Device according to one of claims 9 to 11, characterised in that the crank discs (12, 13) are driven at the same angular velocity.

13. Device according to one of claims 1 to 12, characterised in that the support (2) is moved in a sinusoidal manner, perpendicular to the hose-bag centre line (5).

14. Device according to one of claims 1 to 12, characterised in that the scraping path and/or sealing path is adjustable by alteration of the distance of the shafts (6, 7) from the centre plane (8).

15. Device according to one of claims 1 to 14, characterised in that a is located downstream of the cross-sealing bay.

16. Device according to one of claims 1 to 15, characterised in that each cross-sealing jaw is supported on the support (2) via a measurement sensor (46, 47) for detecting the pressure.

17. Device according to one of claims 1 to 16, characterised in that the distance of each cross-sealing jaw (1) from its support (2) is adjustable via an adjuster (48).

18. Device according to claim 17, characterised in that the sealing jaw (1) is adjusted in accordance with the sealing pressure.

## Revendications

1. Dispositif de fabrication, de remplissage et de fermeture de sachets à partir d'une bande scellable à chaud, comportant des moyens pour réaliser un tube flexible à partir de la bande, comportant également une installation de remplissage ainsi qu'une station de scellement transversal, qui comprend au moins deux mâchoires de scellement transversales, disposées des deux côtés, se faisant face, du tube, et animées d'un mouvement cyclique, étant entendu que chaque mâchoire de scellement transversale (1) est montée sur un support (2) relié à deux ensembles à bras parallèles (3, 4),
caractérisé en ce que les ensembles à bras parallèles (3, 4) peuvent pivoter autour d'axes (6, 7), parallèles entre eux et perpendiculaires à la ligne médiane (5) du tube flexible, pour réaliser un mécanisme à quatre articulations,
en ce que la mâchoire de scellement transversale (1) est soumise à une précontrainte dans la direction du plan médian (8), qui est déterminé par la ligne médiane (5) du tube flexible et la mâchoire de scellement transversale (1), lors de l'opération de soudure, et peut coulisser en sens contraire à l'effort exercé par un ressort,
en ce que chacun des deux axes (6, 7) est entraîné de façon synchrone,
et en ce que la trajectoire de la mâchoire (2) et, avec elle, la course de soudage peuvent être modifiées en modifiant la longueur ("r") des bras (3, 4), la distance (22) des axes (6, 7) par rapport au plan médian (8), et/ou la distance (45) de la mâchoire de scellement transversale (1) par rapport à son support (2).

2. Dispositif suivant la revendication 1, caractérisé en ce que la mâchoire de scellement transversale (1) est montée de façon à pouvoir coulisser sur le support (2).

3. Dispositif suivant la revendication 1 ou la revendication 2, caractérisé en ce que le support (2) est réalisé sous la forme d'une plaque disposée parallèlement au plan médian (8).

4. Dispositif suivant la revendication 3, caractérisé en ce que la mâchoire de scellement transversale (1) peut coulisser perpendiculairement au support (2).

5. Dispositif suivant l'une quelconque des revendications 1 à 4, caractérisé en ce que la mâchoire de scellement transversale (1) est montée essentiellement en position centrale sur le support (2), et en ce que des organes de fermeture et de nettoyage (9, 10), parallèles à la mâchoire de scellement transversale (1), sont disposés des deux côtés de cette dernière.

6. Dispositif suivant la revendication 5, caractérisé en ce que les organes de fermeture et de nettoyage (9, 10) peuvent coulisser perpendiculairement au support (2) et sont soumis à une précontrainte dans la direction du plan médian (8).

7. Dispositif suivant l'une quelconque des revendications 1 à 6, caractérisé en ce que le support (2) est monté sur un ensemble supérieur à bras parallèles articulés (3) et en ce que l'ensemble supérieur à bras parallèles articulés (3) est relié, au moyen d'un bras de liaison (11), à un ensemble inférieur à bras parallèles articulés (4).

8. Dispositif suivant l'une quelconque des revendications 1 à 7, caractérisé en ce que, sur chacun des deux côtés du support (2), est prévu un ensemble à bras parallèles articulés (3, 4).

9. Dispositif suivant l'une quelconque des revendications 1 à 8, caractérisé en ce que l'ensemble à bras parallèles articulés (3, 4) est monté sur l'axe (6, 7) au moyen d'une manivelle ou d'un disque-manivelle (12, 13).

10. Dispositif suivant la revendication 9, caractérisé en ce que les manivelles ou disques-manivelles (12, 13) sont raccordées, pour leur entraînement, à un axe d'entraînement commun (14).

11. Dispositif suivant la revendication 9, caractérisé en ce que la manivelle ou le disque-manivelle (12) de l'ensemble supérieur à bras parallèles articulés (3) est raccordé, pour son entraînement, avec un axe d'entraînement (14), ainsi qu'avec un disque-manivelle (13) de l'ensemble inférieur à bras parallèles articulés (4).

12. Dispositif suivant l'une quelconque des revendications 9 à 11, caractérisé en ce que les disques-manivelles (12, 13) sont entraînés avec la même vitesse angulaire.

13. Dispositif suivant l'une quelconque des revendications 1 à 12, caractérisé en ce que le support (2) se déplace suivant un mouvement sinusoïdal, perpendiculairement à la ligne médiane (5) du sachet en tube flexible.

14. Dispositif suivant l'une quelconque des revendications 1 à 12, caractérisé en ce que la course de nettoyage et/ou la course de scellement est réglable en modifiant la distance entre les axes (6, 7) et le plan médian (8).

15. Dispositif suivant l'une quelconque des revendications 1 à 14, caractérisé en ce qu'à la suite de la station de scellement transversale, est disposée une station de préparation des fonds.

16. Dispositif suivant l'une quelconque des revendications 1 à 15, caractérisé en ce que chaque mâchoire de scellement transversale (1) est en appui sur le support (2) par l'intermédiaire d'un capteur de mesure (46, 47) pour saisir la pression de serrage.

17. Dispositif suivant l'une quelconque des revendications 1 à 16, caractérisé en ce que la distance de chaque mâchoire de scellement transversale (1) par rapport à son support (2) peut être réglée au moyen d'un dispositif de réglage (48).

18. Dispositif suivant la revendication 17, caractérisé en ce que le positionnement de la mâchoire de scellement (1) est réglé en fonction de la pression de scellement.
